# EUROPÄISCHE PATENTSCHRIFT

(11) **EP 2 752 114 B1**
(45) Veröffentlichungstag und Bekanntmachung des Hinweises auf die Patenterteilung: **22.01.2020**
(21) Anmeldenummer: 13401129.5
(22) Anmeldetag: 05.12.2013
(51) Int. Cl.: A01M 7/00

(54) **Landwirtschaftliche Feldspritze**
Agricultural field spraying device
Pulvérisateur agricole à cultures

(30) Priorität: 14.12.2012 DE 102012112263
(43) Veröffentlichungstag der Anmeldung: 09.07.2014
(73) Patentinhaber: Amazonen-Werke H. Dreyer GmbH & Co. KG, 49205 Hasbergen (DE)
(72) Erfinder: Kühn, Christoph, 49824 Ringe (DE); Wernsmann, Daniel, 49577 Ankum (DE)

(56) Entgegenhaltungen:
- EP-A1- 0 726 024
- EP-B1- 0 922 385
- GB-A- 2 342 342

## Beschreibung

Die Erfindung betrifft eine landwirtschaftliche Feldspritze gemäß des Oberbegriffes des Patentanspruches 1.

Eine derartige landwirtschaftliche Feldspritze ist in der EP 0 922 385 B1 beschrieben. Diese Feldspritze weist ein in unterschiedliche Höhenlage zur Zielfläche einstellbares Verteilergestänge auf. Dieses Verteilergestänge wird mittels eines Stellorgans nach Ende des Wendevorganges und zu Beginn der Arbeitsbahn waren durch Betätigen des Zentralschalters zum Widereinschalten der Materialausbringung des Verteilergestänges mittels der Höheneinstelleneinrichtung auf die vorgegebene Arbeitshöhe abgesenkt und in die richtige Neigungslage eingestellt. Hierbei kann das Programm und die Schaltung derart ausgelegt sein, dass zunächst das Verteilergestänge abgesenkt und nach einer kurzen Zeitverzögerung die Materialausbringung eingeschaltet wird. In einer besonderen Ausgestaltung ist bei dieser Feldspritze vorgesehen, dass die Steuer- und/oder Regeleinrichtung derart ausgelegt ist, dass nach einer kurzen Zeitverzögerung die Materialausbringung eingeschaltet wird, während das Absenken und Einstellen der Neigung sofort nach Betätigen des Zentralschalters eingeleitet wird. In weiterer Ausgestaltung können bei dieser bekannten Feldspritze in der Steuer- und/oder Regeleinrichtung standortspezifische Daten über das zu bearbeitende Feld hinterlegt sein und ein

Standortbestimmungssystem mit der Steuer- und Regeleinrichtung zusammenwirken, wobei in der Steuer- und Regeleinrichtung standortspezifisch hinterlegt ist, an welcher Position die Materialausbringung ein- bzw. ausgeschaltet wird und/oder die Höhen- und/oder Neigungserstellung durchgeführt wird.

Hierdurch wird bereits berücksichtigt, dass das Verteilergestänge eine gewisse Zeit zum Absenken aus der angehobenen in die abgesenkte Arbeitsstellung benötigt. Bei einer derartigen Vorgehensweise muss die Position zum Einleiten des Absenkens auf die größte vorkommende Fahrgeschwindigkeit der Feldspritze ausgelegt sein. Dies ist jedoch nicht vorteilhaft, weil bei geringeren Fahrgeschwindigkeiten als die hinterlegte das Gestänge schon viel zu früh abgesenkt ist und noch während des Wendevorganges in dem Bestand aufgrund auftretender Fliehkräfte durch den Wendevorgang in den Pflanzenbestand eintauchen kann. Hierdurch dort kommt es dann zumindest zu Beschädigung an den Pflanzen.

Der Erfindung liegt die Aufgabe zu Grunde, in Abhängigkeit der jeweiligen Fahr- und/oder Arbeitsgeschwindigkeit an der jeweiligen optimalen Position das Absenken des Verteilergestänges aus der Wende- in die Arbeitsposition einzuleiten, damit bei Erreichen des Zielpunktes zum Einschalten der Flüssigkeitsausbringung das Verteilergestänge sich zumindest annähernd in der vorgesehenen Höhenlage befindet.

Diese Aufgabe wird erfindungsgemäß durch die Merkmale des kennzeichnenden Anspruches 1 gelöst.

Infolge dieser Maßnahmen wird entsprechend der jeweiligen Fahrgeschwindigkeit die Position zum Einleiten des Absenkvorganges des Verteilergestänges berechnet, so dass das Verteilergestänge am oder in der Nähe des Zielpunktes zum Einschalten der Flüssigkeitsausbringung sich in der richtigen Arbeitshöhe zur Zielfläche befindet.

Somit wird also das Einleiten des Absenkens des Verteilergestänges von dem Einschalten der Flüssigkeitsausbringung getrennt. Somit wird das Gestänge unabhängig von der Flüssigkeitsausbringung abgesenkt. Entsprechend des Standortbestimmungssystems und der Berücksichtigung der aktuellen Fahrgeschwindigkeit wird das Einleiten des Verteilergestänges in verbesserter

Weise automatisiert. Durch die entsprechende Berücksichtigung der aktuellen tatsächlichen Geschwindigkeit durch das in dem Speicher der Steuer- und Regeleinrichtung hinterlegte Programm wird der Absenkvorgang des Verteilergestänges im Hinblick auf dem Zielpunkt zumindest annähernd genau beendet. Das Absenken geschieht also in optimierter Weise zum richtigen Zeitpunkt.

Das Beenden des Absenkvorganges des Verteilergestänges zumindest annähernd am Zielpunkt lässt sich dadurch erreichen, dass in dem hinterlegten Programm unter Berücksichtigung der von der Feldspritze gefahrenen tatsächlichen Geschwindigkeit vor dem Zielpunkt der Betätigung der Schaltelemente zum Einschalten der Flüssigkeitsausbringung und der Absenkgeschwindigkeit des Verteilergestänges der hinterlegte Zielpunkt zum Einleiten des Absinkens des Verteilergestänges über die Höheneinstelleinrichtung berechnet wird.

Um in automatisierter Weise das Anheben des Verteilergestänges am Ende der Ausbringbahn für den Wendevorgang durchzuführen, ist vorgesehen, dass in dem Speicher der elektronischen Steuer- und/oder Regeleinrichtung ein derartiger Steuerbefehl für die Betätigung des zumindest einen Stellorgans der Höheneinstelleinrichtung zum Anheben des Verteilergestänges hinterlegt ist, dass beim vollkommenden Ausschalten der Flüssigkeitsausbringung durch die Ausbringdüsen das zumindest eine Stellorgan das Verteilergestänge anhebt.

Weitere Einzelheiten der Erfindung sind der Beispielsbeschreibung zu entnehmen. Die Zeichnungen zeigen
- Fig.1: einen Ausschnitt eines Feldendes mit Wendevorgang der Feldspritze in der Draufsicht und in schematischer Darstellung,
- Fig.2: die Darstellung des Wendevorganges der Feldspritze in perspektivischer und schematischer Darstellung,
- Fig.3: die Feldspritze mit dem in Arbeitsstellung abgesenkten Verteilergestänge in der Ansicht von hinten und in schematischer Darstellung und
- Fig.4: die Feldspritze mit dem für den Wendevorgang angehobenen Verteilergestänge in der Ansicht von hinten und in schematischer
Darstellung.

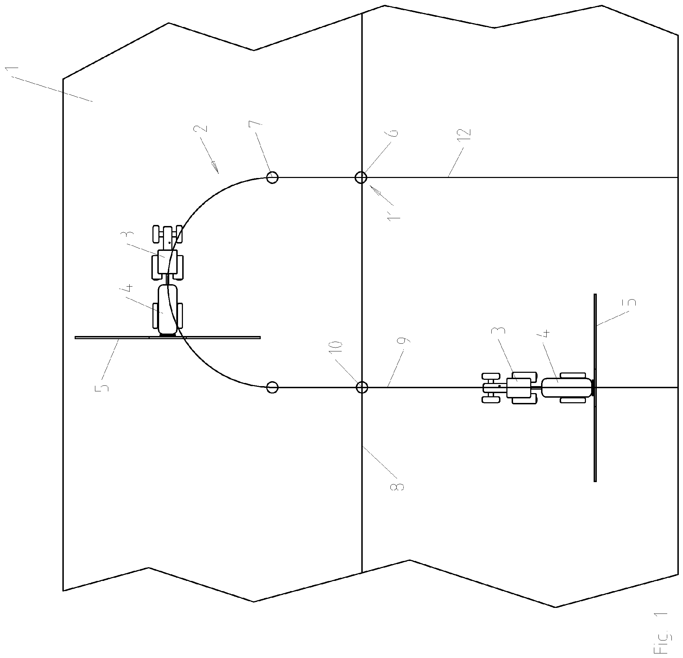

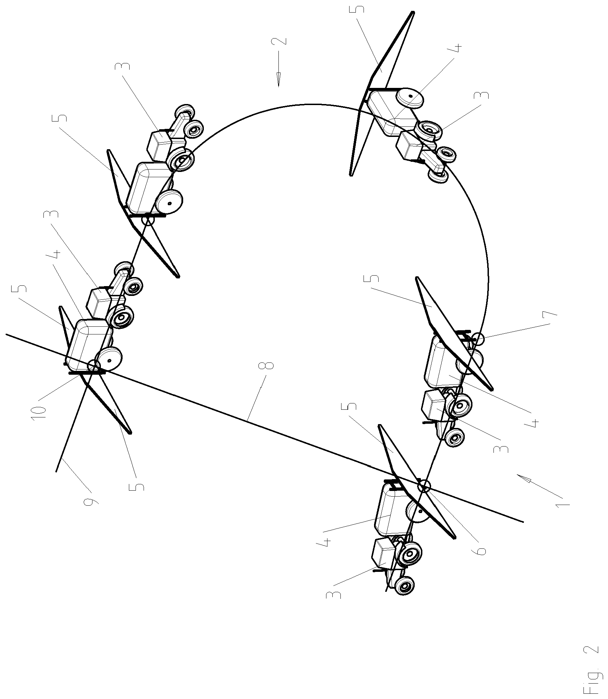

In den Fig. 1 und 2 ist ein Ausschnitt eines Feldendes, das so genannte Vorgewende 1 mit den darin befindlichen Fahrgassen bzw. Fahrweg 2, den eine von einem Ackerschlepper 3 gezogenen Feldspritze 4 fährt, in schematischer Darstellung dargestellt. Die im Einzelnen nicht dargestellte landwirtschaftliche Feldspritze weist einen Rahmen auf. An der Rückseite des Rahmens ist Verteilergestänge 5, welches über eine zumindest ein Stellorgan aufweisende Höheneinstellvorrichtung in unterschiedlichen Höhenlagen zur Zielfläche einstellbar ist. An dem Verteilergestänge 5 sind Ausbringdüsen zum Ausbringen der zu verteilenden Flüssigkeit in einstellbaren Mengen angeordnet.

Weiterhin ist der Feldspritze 4 eine als elektronische Steuer- und/oder Regeleinrichtung ausgebildeter Bordcomputer, der ein Standortbestimmungssystem aufweist, zugeordnet. Die Feldspritze 4 weist Schaltventile zum Ein- und Ausschalten der Flüssigkeitsausbringung auf. Über den Bordcomputer werden die Schalt Elemente zum Ein- und Ausschalten der Flüssigkeitsausbringung betätigt. Weiterhin betätigt der Bordcomputer Stellorgane zur Ein- und Verstellung der Höhenlage des Verteilergestänges 5.

In dem Speicher des Bordcomputer ist ein Programm für zeitlich versetzte Positionen zum Betätigen der Stellorgane für die Höheneinstellvorrichtung einerseits und der Schaltelemente zum Ein- und Ausschalten der Flüssigkeitsausbringung andererseits hinterlegt.

Hierbei ist in dem hinterlegten Programm vor dem Zielpunkt 6 der Betätigung der Schaltelemente zum Einschalten der Flüssigkeitsausbringung und der Absenkgeschwindigkeit des Verteilergestänges 5 der Zielpunkt 7 zum Einleiten des Absenkens des Verteilergestänges 5 über die Höheneinstelleinrichtung hinterlegt. Hierbei wird das Stellorgane zur Einstellung der Höhenlage des Verteilergestänges 5 zur Einleitung des Absenkens des Verteilergestänges 5 an dem hinterlegten Zielpunkt 7 zum Einleiten des Absenken des Verteilergestänges 5 entsprechend angesteuert, so dass sich das Verteilergestänge 5 zumindest bei Erreichen des Zielpunktes 6 zum Einschalten der Flüssigkeitsausbringung zumindest annähernd in der vorgesehenen Höhenlage zur Zielfläche befindet.

Hierbei wird in dem hinterlegten Programm unter Berücksichtigung der von der Feldspritze 4 gefahrenen tatsächlichen Geschwindigkeit vor dem Zielpunkt 6 der Betätigung der Schaltelemente zum Einschalten der Flüssigkeitsausbringung und der Absenkgeschwindigkeit des Verteilergestänges 4 der hinterlegte Zielpunkt 7 zum Einleiten des Absinkens des Verteilergestänges 5 über die Höheneinstelleinrichtung berechnet.

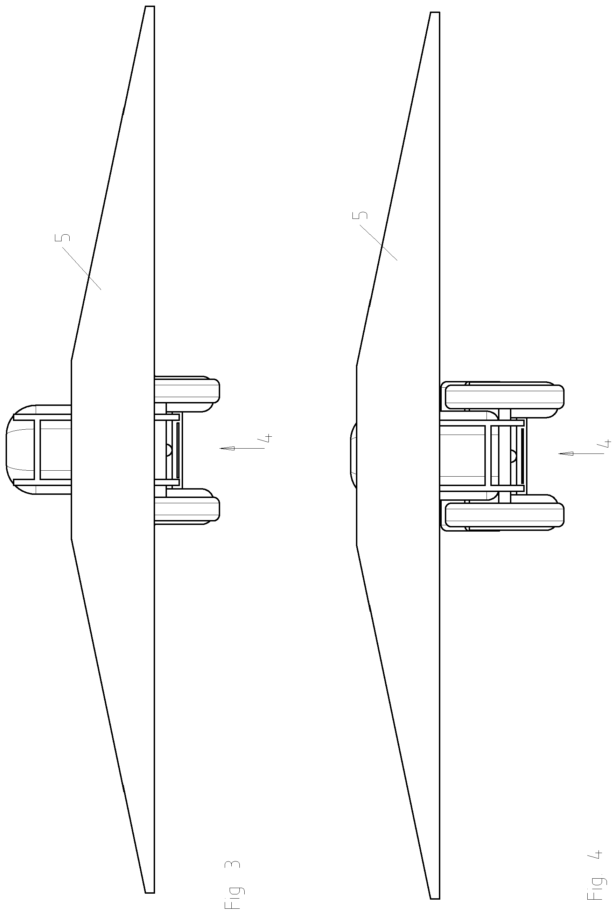

Weiterhin ist in dem Speicher der elektronischen Steuer- und/oder Regeleinrichtung ein derartiger Steuerbefehl für die Betätigung des zumindest einen Stellorgans der Höheneinstelleinrichtung zum Anheben des Verteilergestänges 5 hinterlegt. Außerdem hebt das zumindest eine Stellorgan das Verteilergestänge 5 beim vollkommenen Ausschalten der Flüssigkeitsausbringung durch die Ausbringdüsen auf eine festgelegte Aushubhöhe an, wie Fig. 4 zeigt.

Die Funktionsweise lässt sich folgendermaßen beschreiben:
Wenn die Feldspritze 4 an die Grenze 8 zwischen dem Ende der Ausbringbahn 9 des Feldes und Vorgewende 1, das Verteilergestänge 5 also den Punkt 10 (ist in dem Speicher des Bordrechners mit den entsprechenden Standortdaten hinterlegt) auf der Grenze 8 erreicht, schaltet der Bordrechner aufgrund der hinterlegten Daten in Verbindung mit dem Standortbestimmungssystem über die Schaltelemente die Flüssigkeitszufuhr zu den Ausbringdüsen des Verteilergestänges ab. Gleichzeitig gibt der Bordrechner ein Signal an das Stellorgan der Höheneinstelleinrichtung, so dass das Verteilergestänge 5 aus der Arbeitsstellung gemäß Fig. 3 angehoben wird, und die in Fig.4 dargestellte Position erreicht.

Bei dem Durchfahren des Vorgewendes 1 berechnet der Bordrechner aufgrund des in seinem Speicher hinterlegten Programmes unter Berücksichtigung der aktuellen Fahrgeschwindigkeit der Feldspritze 4 und der Absenkgeschwindigkeit des Verteilergestänges 5, zu welchem Zeitpunkt bzw. an welchem Punkt 7 des Vorgewendes 1 der Absenkvorganges des Verteilergestänges 5 eingeleitet werden muss, damit das Verteilergestänge 5 an dem Punkt 6, an dem das Verteilergestänge 5 die Grenze 8 zwischen dem Vorgewende 1 und dem Beginn 11 der Ausbringbahn 12 erreicht, den vorgesehenen Abstand zur Zielfläche, also die Arbeitsposition erreicht hat. Diese Berechnung erfolgt, wie vorgeschrieben.

## Patentansprüche

1. Landwirtschaftliche Feldspritze mit einem Rahmen, einem am Rahmen mittels zumindest ein Stellorgan aufweisenden Höheneinstellvorrichtung in unterschiedlichen Höhenlage zur Zielfläche einstellbaren Verteilergestänge mit daran angeordneten Ausbringdüsen zum Ausbringen der zu verteilenden Flüssigkeit in einstellbaren Mengen und einer ein Standortbestimmungssystem aufweisenden elektronischen Steuer- und/oder Regeleinrichtung, vorzugsweise einem Bordcomputer zum Betätigen von Schaltelementen, vorzugsweise Schaltventilen zum Ein- und Ausschalten der Flüssigkeitsausbringung und zum Betätigen von zumindest einem Stellorgan zur Ein- und Verstellung der Höhenlage des Verteilergestänge, wobei in dem Speicher der elektronischen Steuer- und/oder Regeleinrichtung ein Programm für zeitlich versetzte Positionen zum Betätigen der Stellorgane für die Höheneinstellvorrichtung einerseits und der Schaltelemente zum Ein- und Ausschalten der Flüssigkeitsausbringung andererseits hinterlegt ist, **dadurch gekennzeichnet, dass** in dem hinterlegten Programm vor dem Zielpunkt (6) der Betätigung der Schaltelemente zum Einschalten der Flüssigkeitsausbringung unter Berücksichtigung der Absenkgeschwindigkeit des Verteilergestänges (5) und der von der Feldspritze (4) gefahrenen tatsächlichen Geschwindigkeit vor dem Zielpunkt (6) der Betätigung der Schaltelemente zum Einschalten der Flüssigkeitsausbringung der Zielpunkt (7) zum Einleiten des Absenkens des Verteilergestänges (5) über die Höheneinstelleinrichtung berechnet wird und hinterlegt ist und das zumindest eine Stellorgan zur Einstellung der Höhenlage des Verteilergestänges zur Einleitung des Absenkens des Verteilergestänges (5) an dem hinterlegten Zielpunkt zum Einleiten des Absenkens des Verteilergestänges (5) entsprechend angesteuert wird, so dass das Verteilergestänge zumindest bei Erreichen des Zielpunktes (6) zum Einschalten der Flüssigkeitsausbringung zumindest annähernd in der vorgesehen Höhenlage zur Zielfläche sich befindet.

2. Feldspritze nach zumindest einen der vorstehenden Ansprüche, **dadurch gekennzeichnet, dass** in dem Speicher der elektronischen Steuer- und/oder Regeleinrichtung ein derartiger Steuerbefehl für die Betätigung des zumindest einen Stellorgans der Höheneinstelleinrichtung zum Anheben des Verteilergestänges (5) hinterlegt ist, dass beim vollkommenen Ausschalten der Flüssigkeitsausbringung durch die Ausbringdüsen das zumindest eine Stellorgan das Verteilergestänge (5) anhebt.

## Claims

1. Agricultural field spraying device having a frame, a boom which can be adjusted on the frame into a different vertical position with respect to the target surface by means of a vertical adjustment device having at least one actuating element, said boom having discharge nozzles arranged thereon, for discharging the fluid to be distributed in adjustable quantities and an electronic open-loop and/or closed-loop control device having a location-determining system, said device being preferably an on-board computer for activating switching valves, preferably switching elements for switching the fluid discharge on and off and for activating at least one actuating element for setting and adjusting the vertical position of the boom, wherein a programme for chronologically offset positions for the activation of the actuating elements for the vertical position device, on the one hand, and of the switching elements for switching on and off the fluid discharge, on the other hand, is stored in the memory of the electronic open-loop and/or closed-loop control device, **characterized in that** before the target point (6) of the activation of the switching elements for switching on the fluid discharge is calculated in the stored programme taking into account the lowering speed of the boom (5) and the actual speed at which the field spraying device (4) is travelling is calculated in the stored programme before the target point (6) of the activation of the switching elements for switching on the fluid discharge the target point (7) for the initiation of the lowering of the boom (5) by means of the vertical adjustment device is calculated and stored, and the at least one actuating element for setting the vertical position of the boom for the initiation of the lowering of the boom (5) is correspondingly actuated at the stored target point for the initiation of the lowering of the boom (5) so that at least when the target point (6) for switching on the fluid discharge is reached the boom is at least approximately located in the provided vertical position with respect to the target surface.

2. Field spraying device according to at least one of the preceding claims, **characterized in that** a control command for the activation of the at least one actuating element for the vertical adjustment device for raising the boom (5) is stored in the memory of the electronic open-loop and/or closed-loop control device such that when the switching off of the fluid discharge through the discharge nozzles has been completed the at least one actuating element raises the boom (5).

## Revendications

1. Pulvérisateur agricole à cultures avec un cadre, une tringlerie de distribution réglable à une position de hauteur différente par rapport à la surface ciblée au moyen d'un dispositif de réglage en hauteur comportant au moins un actionneur avec des buses d'épandage disposées dessus pour épandre en quantités réglables le liquide à distribuer et un dispositif de commande et/ou de régulation électronique comportant un système de localisation, de préférence un ordinateur embarqué pour actionner des éléments de commande, de préférence des soupapes de commande pour la marche et l'arrêt de l'épandage de liquide et pour actionner au moins un actionneur pour le réglage et le déplacement de la position en hauteur de la tringlerie de distribution, sachant que dans la mémoire du dispositif de commande et/ou de régulation électronique un programme est mémorisé pour des positions décalées dans le temps pour actionner les actionneurs pour le dispositif de réglage en hauteur d'une part et des éléments de commande pour la marche et l'arrêt de l'épandage de liquide d'autre part, **caractérisé en ce que** dans le programme mémorisé avant le point ciblé (6) de l'actionnement des éléments de commande pour la mise en marche de l'épandage de liquide en tenant compte de la vitesse de descente de la tringlerie de distribution (5) et de la vitesse effective utilisée par le pulvérisateur (4) avant le point ciblé (6) de l'actionnement des éléments de commande pour la mise en marche de l'épandage du liquide, le point ciblé (7) est calculé et mémorisé par le dispositif de réglage en hauteur pour initier la descente de la tringlerie de distribution (5) et au moins un actionneur pour le réglage de la position en hauteur de la tringlerie de distribution pour initier la descente de la tringlerie de distribution (5) est activé de façon correspondante au point ciblé mémorisé pour initier la descente de la tringlerie de distribution (5) de telle manière que la tringlerie de distribution se trouve au moins à peu près à la position en hauteur prévue par rapport à la surface ciblée au moins lors de l'atteinte du point ciblé (6) pour la mise en marche de l'épandage de liquide.

2. Pulvérisateur selon au moins la revendication précédente, **caractérisé en ce que** dans la mémoire du dispositif de commande et/ou de régulation électronique est mémorisé un ordre de commande pour l'actionnement d'au moins un actionneur du dispositif de réglage en hauteur pour relever la tringlerie de distribution (5) de telle sorte que lors de l'arrêt complet de l'épandage de liquide par les buses d'épandage, au moins un actionneur relève la tringlerie de distribution (5).
